# EUROPEAN PATENT SPECIFICATION

(11) **EP 0 816 739 B1**
(45) Date of publication and mention of the grant of the patent: **03.05.2006**
(21) Application number: 97108941.2
(22) Date of filing: 03.06.1997
(51) Int. Cl.: F16L 33/02, F16F 15/34, B65D 63/04

(54) **Improved balancing arrangement for hollow drive shafts**
Verbesserte Vorrichtung zum Ausgleich von Antriebswellen
Dispositif d'équilibrage amélioré pour arbres creux de transmission

(30) Priority: 28.06.1996 US 20763 P
(43) Date of publication of application: 07.01.1998
(73) Proprietor: Hans Oetiker AG Maschinen- und Apparatefabrik, 8812 Horgen (CH)
(72) Inventor: Oetiker, Hans, 8812 Horgen (CH)
(74) Representative: Strehl Schübel-Hopf & Partner

(56) References cited:
- EP-A- 0 601 307
- DE-C- 3 930 716
- GB-A- 2 238 846
- US-A- 4 724 583
- US-A- 4 998 326
- US-A- 5 230 246
- US-A- 5 283 931

## Description

### FIBLD OF THE INVENTION

The invention relates to a balancing arrangement, and more particularly to an improved balancing arrangement for hollow drive shafts which allows for the compensation of greater imbalances.

### BACKGROUND OF THE INVENTION

Balancing arrangements of various types are known in the prior art. For example, **U.S. Patent 3,901,046 to Hofmann** discloses a balancing arrangement utilizing a clip to be tightened on the rotating member whereby counterweights are affixed to the clip within an area substantially opposite the connection of the free ends of the clip by means of a screw-type (worm-drive) connection. This type of arrangement is relatively complicated in installation because of the time-consuming determination of the imbalance and is also relatively inefficient because the counterweight must always offset also the screw-type connection of the open ends of the clip.

My prior **British Patent 2,238,846** avoids the shortcomings and drawbacks of the aformentioned patent by placing the counterweight within the area of the mechanical connection of the open clamping band. With the earless construction as disclosed in Figures 1-5 of this patent, sections having concavely shaped lateral band portions with an hourglass-like window defined therebetween are used to impart elastic stretchability in the longitudinal direction to the clamping band to compensate for thermal fluctuations of the drive shaft. The counterweight is thereby affixed to the clamping band by hook-like projections. In the embodiment of Figures 6-12 of this patent, the tightening member is constituted by a plastically deformable ear whereby in Figures 10-12 the ear is made in one piece with the counterweight.

My **U.S. Patent 5,230,246**, which discloses the features of the preamble of claim 1, differs from the aforementioned British patent by a special construction of the plastically deformable ear which is provided with tab-like members intended to perform the dual function of avoiding problems in case of positional changes of the balancing arrangement and of increasing the strength of the ear-like member.

**EP 0 601 307 A1** discloses another clamp which exhibits the features included in the preamble of claim 1.

Hollow drive shafts are made to specified dimensions with a given accuracy. However, the greater the permissive tolerance in the external dimensions of the shaft, i.e., the greater the possible imbalance in the drive shafts, the greater must be the weight range of the counterweights to compensate for the imbalance. In other words, if drive shafts can be manufactured with lesser accuracy in the external dimensions which is desirable from a manufacturing cost point of view, then it becomes important to provide a balancing arrangement which is capable of securely handling counterweights of greater weight.

Recent developments have indicated a need to double the size of the maximum weight of the counterweight to be usable in the balancing arrangement. However, this goal has appeared unattainable with balancing arrangements as disclosed in the aforementioned British and U.S. Patents.

### SUMMARY OF THE INVENTION

It is therefore a principal object of the present invention to provide a balancing arrangement and a preassembled clamp structure with an integral balancing counterweight which efficiently obviates the shortcomings and drawbacks encountered with the prior art constructions and assures reliable secure holding of counterweights with double the weight contemplated heretofore.

The underlying problems are solved according to this invention by a specific arrangement of the combination of clamp structure and counterweight. More specifically, the mechanical connection of the clamp structure must be able to withstand greater tightening forces for the increased weight of the necessary maximum counterweights and, with the use of a so-called "Oetiker" ear, the holding ability of the ear must also be substantially increased.

It has also been discovered that for most purposes, so-called "Oetiker" ears are able to provide sufficient compensation for thermal temperature changes of the drive shaft so that it is sufficient to provide elasticity on the part of the clamping band by the use of a clamping band of generally concave shape in transverse cross section. Elasticity may also be imparted to the counterweight by the use of a radius of curvature of its internal surface slightly smaller than the radius of curvature of the drive shaft.

A surprisingly greater holding ability of a clamp with a so-called "Oetiker" ear is attained by utilizing two side-by-side longitudinally extending reinforcing grooves having each a rounded-off bottom and delimited by substantially parallel side surfaces interconnected by semi-circular end surfaces, especially also with the use of a wider clamping band than normally used heretofore. A satisfactory holding ability could be attained with these modifications.

Additionally, it has also proven advantageous to connect the counterweight permanently to the clamping band by spot welding within the area of the inner band end portion between the mechanical connection and the free end in the inner band portion which permits an inexpensive and efficient preassembly of counterweight and clamp structure. In the alternative, a simple mechanical connection within the same area with a centering arrangement of the counterweight may be used in a modified embodiment of this invention.

In order to improve the effectiveness of the counterweight, the area of the clamping band opposite the mechanical connection and of the counterweight may be subjected to a weight reduction by the removal of clamping band material with the use of openings of various sizes, shapes and dimensions as well as of a varying number of such openings, as will be described more fully hereinafter.

### BRIEF DESCRIPTION OF THE DRAWING

These and other objects, features and advantages of the present invention will become more apparent from the following description when taken in connection with the accompanying drawing which shows, for purposes of illustration only, several embodiments in accordance with the present invention, and wherein:

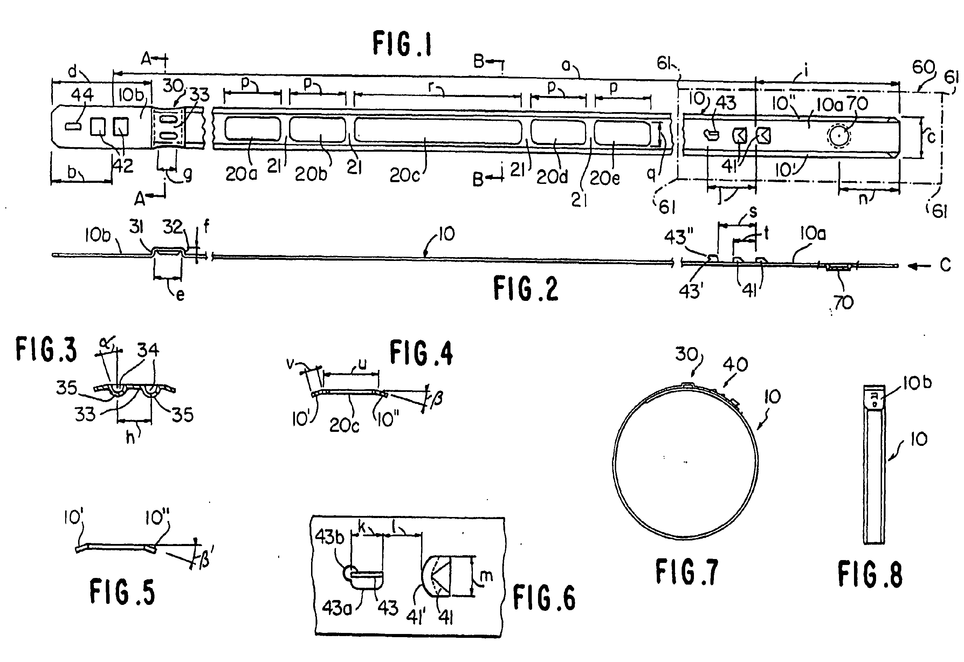

Figure 1 is a plan view on a clamp structure of one embodiment for use in the balancing arrangement of the invention;
Figure 2 is a side elevational view of the clamp structure of Figure 1;
Figure 3 is a cross-sectional view, taken along line A-A of Figure 1;
Figure 4 is a cross-sectional view, taken along line B-B of Figure 1;
Figure 5 is an end elevational view, taken in the direction of arrow C of Figure 2;
Figure 6 is a somewhat schematic partial plan view on an enlarged scale of certain details of the guide-and-support hook and of the support hook in the clamp structure of Figures 1 and 2;
Figure 7 is an axial elevational view of the clamp structure in the non-tightened condition;
Figure 8 is a side elevational view of Figure 7;

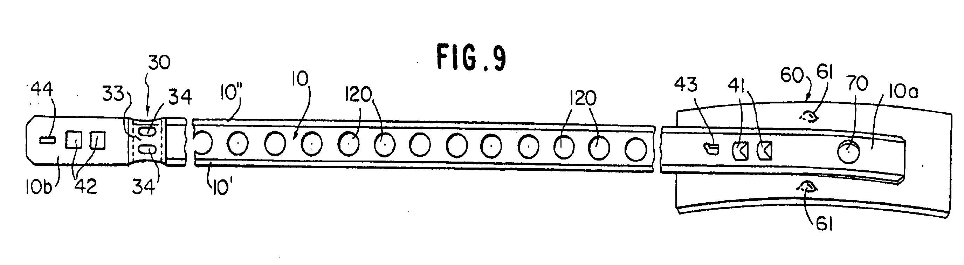

Figure 9 is a schematic plan view of a modified embodiment of the combination of clamp structure and counterweight for use in a balancing arrangement of this invention;

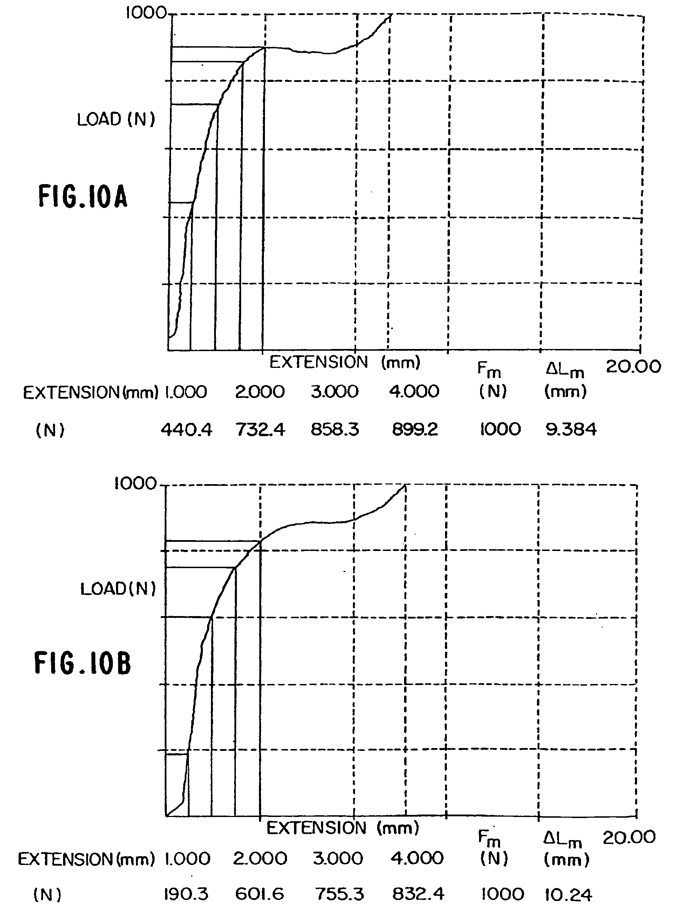

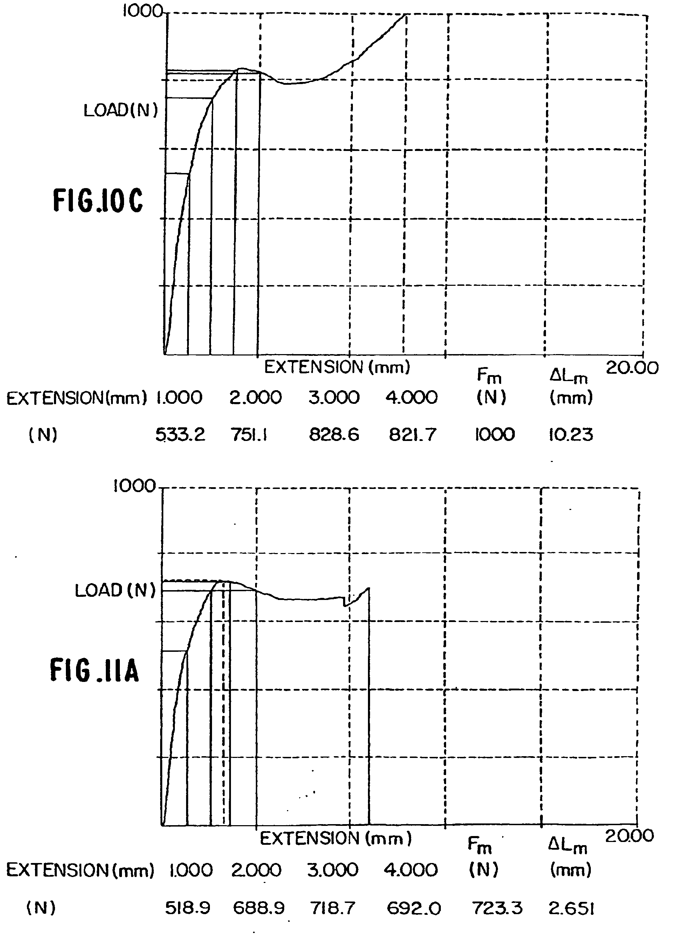

Figures 10A, 10B and 10C are graphs representing the test data obtained with a clamp structure having a reinforced ear structure as disclosed in U.S. Patent 5,230,246;

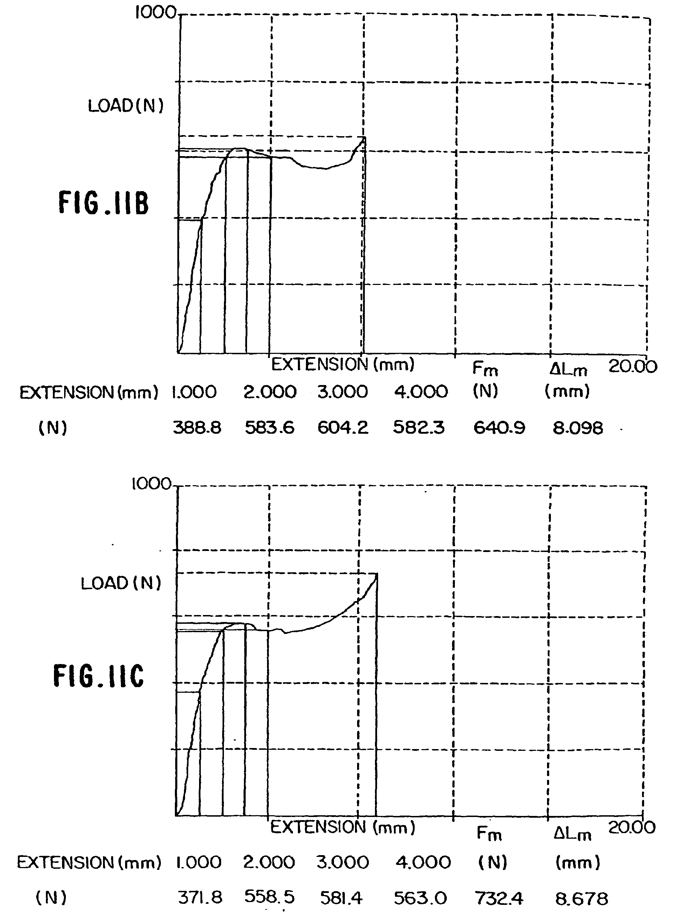

Figures 11A, 11B and 11C are graphs representing the test data obtained with a clamp structure equipped with a reinforced plastically deformable ear of this invention;

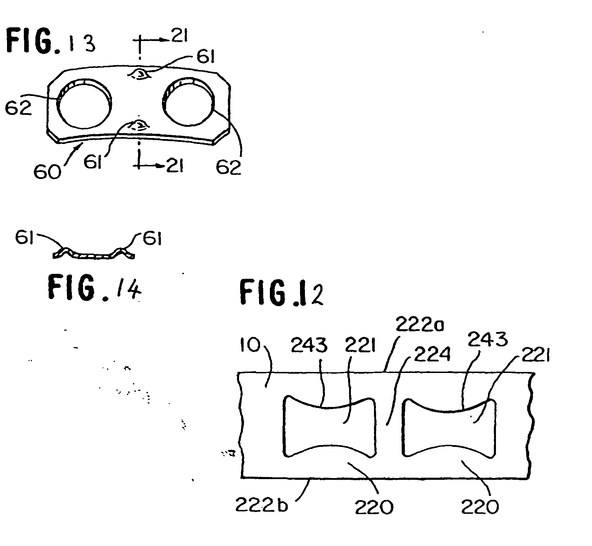

Figure 12 is a partial plan view on the clamping band of a clamp structure with a modified construction of a weight-reducing opening;
Figure 13 is a somewhat schematic slightly perspective view of a plate-like counterweight member for use in this invention; and
Figure 14 is a cross-sectional view taken along line 21-21 of Figure 13.

### DETAILED DESCRIPTION OF THE DRAWINGS

Referring now to the drawing wherein like reference numerals are used throughout the various views to designate like parts, referring first to Figures 1-8, reference numeral **10** generally designates a clamp structure which is provided with a so-called "Oetiker" ear generally designated by reference numeral **30** and a mechanical connection generally designated by reference numeral **40** (Figure 7). The clamping band **10** includes an inner band portion **10a** and an outer band portion **10b** which, in the installed condition mutually overlap, at least in part. The lateral band portions **10'** and **10"** are bent down (Figure 5) to impart elasticity to the clamping band by a more or less convex shape which seeks to flatten out as the clamp structure is tightened about the counterweight and rotating shaft. The lateral edges of the bent-down portions **10**' and **10"** will seek to dig into the external surfaces of the rotating member (not shown) and of the counterweight. To enhance the anchoring, these edges may also be non-smooth as realized by any means described in my aforementioned British Patent 2238846 and U.S. Patent 52302146

The modified, plastically deformable ear generally designated by reference numeral **30** which serves as tightening means includes two generally outwardly extending leg portions **31** and **32** interconnected by a bridging portion **33** which is provided with a reinforcement arrangement (Figures 2 and 3). The ear reinforcement arrangement is constituted by two groove-like reinforcing indentations **34**, each having a rounded-off bottom **35**, whereby each reinforcing groove is formed by substantially parallel, longitudinal side surfaces interconnected at each end by substantially semi-circularly shaped end portions as shown in Figures 1 and 3. The side surfaces as well as the end surfaces of a respective groove-like indentation **34** thereby slope down toward one another at an angle α with respect to the vertical, for example, at an angle of about 15° to merge into the rounded-off bottom.

The mechanical connection generally designated by reference numeral **40** includes two cold-deformed, deep-drawn support hooks **41** which may be constructed as disclosed in my prior U.S. Patent 4,299,012 or as shown more particularly in Figures 1, 2 and 6 of this application. Following the two support hooks **41** in a direction away from the free end of the inner band portion 10a is a guide and support hook **43** bent out of the clamping band about an axis extending generally in the longitudinal direction after two cuts as shown in greater detail in Figure 6. The combined guide and support hook **43** includes, in addition to the usual upwardly extending oblique guide surface **43'** (Figure 2) a forwardly extending tip with a slightly downwardly extending tip end portion **43"** to reliably prevent disengagement of the outer band portion **10b** from the combined guide and support hook once the clamp structure is preassembled before tightening by engagement of the combined guide and support hook **43** in the slot-like aperture **44** in the outer band portion **10b**. This particular configuration of the combined guide and support hook **43** is achieved by a first cut **43a** and a subsequent part-circular second cut **43b** which are made before the guide hook is bent out of the clamping band plane into its substantially vertical position. Rectangular, preferably square apertures **42** are provided in the outer band end portion **10b** to receive the support hooks **41** as the two band end portions **10a** and **10b** are drawn toward one another by the surface **43'** as the clamp is tightened by plastic deformation of the ear **30**. The counterweight, generally designated by reference numeral **60** and shown in Figure 1 in dash-and-dotted lines, which may be of any suitable size and/or thickness, is secured to the inner clamping band portion **10a** intermediate its free end and the first support hook **41**, for example, by welding schematically indicated at **70**. To improve the anchoring of the counterweight, its corners **61** are bent down (not shown) so as to dig into the outer surface of the rotating member as the clamp structure is tightened. However, in addition to the anchoring achieved by the bent-down corners **61** or in lieu thereof, any of the anchoring arrangements disclosed in my aforementioned British and U.S. Patents may also be used. The counterweight of predetermined weight and size may be made of any known material suitable therefor, such as of lead and alloys thereof, powdered metals or even of a commercially available lead tape provided with an adhesive surface which would also enhance anchoring.

To further the effectiveness of the counterweight as regards its effective weight, it is desirable to remove mass from the area of the clamp structure opposite to the counterweight. In the embodiment of Figure 1, a number of rectangular apertures **20a, 20b, 20c, 20d** and **20e** are provided, which are located in the area of the clamp structure at least approximately opposite the area of the mechanical connection and the counterweight. The size and number as well as the configurations of the apertures may be selected as desired for a particular application, depending also on the strength of the material for the clamp structure. In the embodiment of Figure 1, a relatively longer aperture **20c** is followed on each side by two or more smaller apertures **20a, 20b** and **20d, 20e** with each aperture of substantially rectangular configuration having rounded-off corners. The width dimension of the web portions **21** between adjacent apertures, i.e., the dimension of these web portions **21** in the clamping band longitudinal direction, may again be chosen depending on the type of material used, for example, galvanized steel or stainless steel which have different strength properties. As a rule of thumb, the width of these web portions **21** should be at least about 20% to about 25% of the width of the clamping band. The circumferential area of the clamp structure covered by such apertures again depends on the strength of the material and can be empirically determined readily to optimize a given design. However, it follows that the greater this circumferential area, the greater will be the effect of the counterweight.

Figure 9 illustrates a modified embodiment of a clamp structure for use in the balancing arrangement of this invention in which the rectangular apertures **20a, 20b, 20c, 20d** and **20e** of Figure 1 are replaced by circular apertures **120** which may extend over substantially the entire clamping band portion intermediate the inner and outer band end portions **10a** and **10b** because of greater strength of this arrangement. Of course, it is also possible to use oval apertures and/or a combination of regularly or non-regularly following oval and circular apertures. As to the rest, the embodiment of Figure 9 is similar to that of Figures 1 through 8.

Of course, in lieu of rectangular, circular or oval apertures or any mixture thereof, the clamping band used in the various embodiments of this invention may also be provided with elasticity-enhancing sections having concavely shaped lateral band portions defining therebetween an approximately hourglass-shaped window, as disclosed in the aforementioned British patent or in **U.S. Patent 5,230,246**. However, as such elasticity-enhancing sections entail certain difficulties in their manufacture by stamping out the concavely shaped outer edges of the lateral band portions, according to a modified embodiment illustrated in Figure 19, the clamping band **10** may be provided with one or preferably several sections **220**, each provided with a window **221** resembling the shape of an hourglass but retaining the substantially rectilinear outer edges **222a** and **222b**. The size, i.e., length and width as well as the curvature **223** of each section **220** and the width of the web portions **224** may be readily determined empirically to optimize the desired results in a given application, whereby the curvatures **223** are preferably part of a circular arc with a radius of curvature greater than one half, preferably two-thirds of the width of the clamping band. The window **221** also preferably has rounded-off corners **225** with a radius of curvature substantially smaller than the radius of curvature **223**.

The following tests demonstrate the surprising greater holding ability of the ear structure of this invention compared to that of the reinforced ear structure of U.S. Patent 5,326,325.

Table I sets forth the test data obtained with three clamp samples having the reinforced ear structure according to my aforementioned U.S. Patent 5,326,325, while Figures 10A, 10B and 10C are graphs representing the test data obtained with the ear of the aforementioned patent.

Table II shows the test data obtained with three clamp samples having an ear construction according to the embodiment of Figures 1 through 5, while Figures 11A, 11B and 11C again show graphically these test results.

**TABLE I**

| Extension (mm) | 1.000 | 2.000 | 3.000 | 4.000 | Fₘ (N) | ΔLₘ (mm) |
|---|---|---|---|---|---|---|
| | | | | | | |
| Load 1 (N) | 518.9 | 688.9 | 718.7 | 692.0 | 723. 3 | 2.651 |
| Load 2 (N) | 388.8 | 583.6 | 604.2 | 582.3 | 643.2 | 8.098 |
| Load 3 (N) | 371.8 | 558.5 | 581.4 | 563.0 | 732.4 | 8.678 |
| mean | 426.5 | 610.4 | 634.8 | 612.5 | 699.6 | 6.476 |
| standard deviation | 80.5 | 69.2 | 73.6 | 69.6 | 49.1 | 3.325 |

**TABLE II**

| Extension (mm) | 1.000 | 2.000. | 3.000 | 4.000 | Fₘ (N) | ΔLₘ (mm) |
|---|---|---|---|---|---|---|
| | | | | | | |
| Load 1 (N) | 440.4 | 732.4 | 858.3 | 899.2 | 1000 | 9.384 |
| Load 2 (N) | 190.3 | 601.6 | 755.3 | 832.40 | 1000 | 10.21 |
| Load 3 (N) | 533.2 | 751.1 | 828.6 | 821.7 | 1000 | 10.23 |
| mean | 388.0 | 695.0 | 814.1 | 351.1 | 1000 | 9.954 |
| standard deviation | 177.3 | 81.4 | 53.0 | 42.0 | 0.0 | 0.493 |

A comparison of these tests reveals that the holding ability of the ear of the embodiment of Figures 1 through 5 is greatly improved over that in my **U.S. Patent 5,230,246**.

Typical values for the various embodiments are as follows, it being understood that these values are typical merely for one given embodiment of the invention and are not to be construed as limitative in any way of possible embodiments of this invention which may be varied as known to those skilled in the art. All dimensions indicated hereinafter are in millimeters and are taken from the drawings attached to the provisional application. The length dimension a depends on the diametric dimension of the clamp and in this particular embodiment is about 334 mm. and represents the length of the clamp from the free end of the inner band portion **10a** to the edge nearer the free end of the outer band portion of the second aperture **42**. The dimension **b** from this same edge of the second aperture **42** to the free end of the outer band portion **10b** is about 21 mm. so that the overall length of the entire clamp is about 355 mm. The width c of the clamping band is 14 mm. and the dimension **d** from the free end of the outer band portion 10b to the outwardly extending leg **31** of the plastically deformable ear **30** is about 34 mm. The apertures **42** are each about 5.5 mm. in the clamping band transverse direction and about 5 mm. in the longitudinal direction of the clamping band. The width of the slot-like aperture **44** in the transverse direction is about 2 mm., and its length in the longitudinal direction is about 6 mm. The spacing between mutually facing edges of the apertures **42** is about 3 mm. which is also the spacing between adjacent edges of the slot-like aperture **44** and the first, i.e., next-adjoining aperture **42**. The length e of the ear **30** in the longitudinal direction of the clamp is about 10 mm., and the height f is about 3.5 mm. The length **g** of each groove-like indentation **34** is about 6 mm., the radius of curvature of the rounded-off bottom **35** of each groove-like indentation is about 1 mm. and the spacing h between the centers of the bottoms of the groove-like indentation in the clamping band transverse direction is also about 6 mm. The angle α of the longitudinally extending lateral walls of each groove-like indentation which are inclined toward one another is about 15°. The leg portions **31** and **32** need not extend exactly at right angle to the surface of the clamping band but may form an angle of about 5° perpendicular to the clamping band surface (Figure 2).

Turning to the opposite end of the clamp structure of Figures 1 through 8, the dimension **i** from the free end of the inner band portion **10a** to the edge **41'** of the support hook nearer the free end of the inner band portion is about 48.6 mm. and the spacing j from this edge **41'** to the center of the part-circular cut **43b** is about 10 mm. while the spacing between the center of cut 43b and the edge **41'** of the support hook **41** remote from free end of the inner band portion **10a** is about 10.2 mm. The diameter of the part-circular cut **43b** is 2 mm., and the distance k in the longitudinal direction from the center of cut **43b** to the end of the cut **43a** is about 4.7 mm. so that the distance **l** is 5.5 mm. The diameter of the cut **43b** is about 2 mm. and the radii of curvature in the cut **43a** are about 1 mm. The width m in the transverse direction of each support hook **41** is about 5 mm. and the distance **n** of the center of the circular aperture **70** from the free end of the inner band portion **10a** is about 21 mm. The apertures **20a, 20b, 20d** and **20e** have an overall length **p** in the longitudinal direction of about 20 mm. and a width **q** of about 8 mm. with the corners rounded off with a radius of curvature of about 2 mm. in the four corners thereof. The length **r** in the longitudinal direction of the longer aperture **20c** is about 60 mm. with a width again of about 8 mm. and the corners thereof rounded with a radius of curvature of 2 mm. The mutual spacing between all apertures **20a, 20b, 20c, 20d** and **20e** is about 3 mm. As shown in Figure 4, the angle of inclination β of the inclined lateral band portions within the area of aperture **20c** is about 15° whereby the length of the remaining lateral band portions within the area of these apertures **20a** through **20e** is about 2 mm. As shown in Figure 5 within the area of the inner clamping band portion 10a of the remaining lateral band portions, the angle β' may be about 20°. As shown in Figure 2, the dimension **s** is about 13.5 mm. and the dimension **t** about 8 mm. As to the rest of the dimensions in the embodiment of Figures 1 through 8, they can be chosen to suit a particular application such as thickness of the material which in the given embodiment is 0.8 mm. The same is true for the material used which in the particular embodiment is AISI 304 stainless steel.

The embodiment of Figure 9 is similar to the embodiment of Figures 1 through 8 except that the apertures **20a** through **20e** are replaced by regularly spaced openings **120** whose diameter can be selected at any desired value, depending on material to be used, and thickness of the clamping band material to enhance the effectiveness of the counterweight as mentioned above.

To facilitate the task of selecting the proper counterweight, a counterweight of standard size may be used, for example, of rectangular configuration with the corners thereof chamfered off and all of the same dimensions which offer different weights by the number, size and locations of the openings **62** (Figure 13) provided in the plate-like counterweight members **60**. For example, the plate-like member without any openings may have a weight of 5 grams, and with two openings **62** as shown in Figure 13 may have a weight of 2 grams. Intermediate values can be attained by the number and size of such openings. The person selecting the required counterweight can then assemble the required weight from a number of such plate-like members. To hold the plate-like members in a predetermined position relative to one another and to the clamping band as well as rotating member, each plate-like member is provided with a small pressed-out knub-like indentation **61** (Figures 13 and 14) which permits stacking the plate-like members in proper position and retaining the stacked plate-like members in such position.

In case the required weight for the counterweight is less than the weight of the connection of the overlapping band portions and the tightening means, it may be desirable to provide a balancing clamp structure preassembled by means of a counterweight so as to balance the clamp structure in itself. To that end, the plate-like member representing the combined weight of the connecting and tightening means may be permanently secured, for example, by welding in the area opposite the connecting and tightening means whereby only one or several small plate-like members need to be selected to balance the rotating member by placing these plate-like members in the correct position on the rotating member. By providing the permanently secured counterweight with knub-like indentations, the plate-like member(s) to compensate for the imbalance in the rotating member may then be assembled in stacked relationship to the permanently secured balancing weight. This permits the use of a standard size of plate-like members though also more than one standard size of plate-like members may be used provided they also include the pressed-out knub-like indentations to permit stacking with plate-like members of different sizes. Furthermore, standard sizes of different thickness may also be provided as long as the plate-like members are always provided with the means to enable stacking thereof. This not only facilitates the work of the person charged with balancing the rotating member but also keeps the assembled plate-like members in predetermined relative position by preventing relative movement once in stacked relationship. If the stack of plate-like members would become too high in a radial direction as installed on the rotating member, it is only necessary to use two clamp structures side-by-side to divide the number of stacked plate-like members used with each clamp structure.

While I have shown and described several embodiments in accordance with the present invention, it is understood that the same is not limited thereto but is susceptible of numerous changes and modifications as known to those skilled in the art and encompassed by the scope of the appended claims. For example, if elastic stretchability is required in the longitudinal direction of the clamp structure, it is also possible to utilize one or more sections of concavely shaped lateral band portions spaced by a window resembling an hourglass. Furthermore, according to a preferred embodiment of this invention, in lieu of such sections, one or more undulations may be provided in the clamping band of suitable height and radius of curvature which are preferably provided in the outer band portion near the beginning of the overlap. Such tolerance-compensating undulation(s) would also compensate for differences in thickness of the counterweights and would therefore obviate the need to manufacture different clamps for different counterweight thicknesses. Additionally, any of the features described in my aforementioned patents may be used if desired. Furthermore, an auxiliary spring structure may also be incorporated in each of the various embodiments of the clamp structures described herein by utilizing the auxiliary spring arrangements as disclosed in my prior **U.S. Patents 5,111,555** and **5,138,747**.

## Claims

1. A clamp for balancing a rotating member by means of a counterweight (**60**), comprising
a clamping band (**10**) having inner and outer band end portions (**10a, 10b; 210a, 210b**) overlapping in the installed condition of the clamp,
connecting means (**40**) for mechanically connecting the free ends of said clamping band (**10**), and
means for tightening the clamping band (**10**) about said rotating member, said tightening means including a plastically deformable ear (**30**) with two outward extending leg portions (**31, 32**) interconnected by a bridging portion (**33**) provided with reinforcing means (**34**) to increase the holding ability of the clamp in the presence of a heavier counterweight (**60**),
wherein at least one of said connecting and tightening means is located within a circumferential area of the clamping band (**10**) intended for the counterweight (**60**) so that any weight of the at least one of connecting and tightening means is in effect additive to the weight of a selected counterweight (**60**),
**characterised in that** said reinforcing means is formed by several deep-drawn groove-like reinforcing indentations (**34**) each of elongated shape delimited by substantially parallel longitudinal lateral surfaces interconnected by substantially semi-circular transversely extending connecting portions at the sides of each indentation (**34**).

2. The clamp of claim 1, wherein each of said reinforcing indentations (**34**) has a rounded-off bottom (**35**) with the lateral surfaces inclined from the top of the bridging portion (**33**) downward and at least slightly toward one another to merge in the rounded-off bottom (**35**) at an angle (**α**) of the order of 15°.

3. The clamp of claim 1, wherein said groove-like reinforcing indentations (**34**) are located in said bridging portion (**33**) symmetrically with respect to the longitudinal centre plane of the clamping band (**10**), and wherein the depth of each of said groove-like reinforcing indentations (**34**) from the top of the bridging portion (**33**) to the lower surface of the bottom (**35**) is of the order of 55% to 65% of the height of the ear (**30**) from the top of the bridging portion (**33**) to the bottom surface of the clamping band (**10**) in its rectilinear condition.

4. The clamp of claim 3, wherein said ear (**30**) has a height of the order of 3.5 mm.

5. The clamp of claim 1, wherein said connecting means (**40**) includes in one of said band end portions (**10a, 10b**) at least one pressed-out, deep-drawn support hook (**41**) and one tab-like combined guide and support hook (**43**) bent out of the clamping band (**10**) about an axis extending in the clamping band (**10**) longitudinal direction, and in the other band end portion at least one substantially rectangular aperture (**42**) for engagement by said support hook (**41**) and one slot-like aperture (**44**) extending in the clamping band (**10**) longitudinal direction for engagement by said combined guide and support hook (**43**).

6. The clamp of claim 5, wherein starting from the free end of the inner band end portion (**10a**) said at least one support hook (**41**) is followed in a direction away from said free end by said combined guide and support hook (**43**).

7. The clamp of claim 5, wherein said combined guide and support hook (**43**) includes an upward extending oblique guide surface (**43'**) and a forward extending tip with a slightly downward extending tip end portion (**43"**) to prevent disengagement of the outer band end portion (**10b**) from the combined guide and support hook (**43**).

8. The clamp of claim 7, wherein said combined guide and support hook (**43**) results from a first cut (**43a**) and a subsequent part-circular cut (**43b**) prior to bending the combined guide and support hook (**43**) into its vertical position.

9. The clamp of claim 1, wherein said clamping band (**10**) is made from galvanised or stainless steel material devoid of any significant elastic stretchability in its longitudinal direction.

10. The clamp of claim 1, including an undulation in the clamping band (**10**), preferably located in the outer band end portion (**10b**) within an area near the beginning of the overlap.

11. The clamp of claim 1, wherein elasticity is imparted to said clamping band (**10**) by a convexly shaped configuration in a cross-section transverse to the clamping band longitudinal direction which resists flattening during tightening of the clamping band (**10**).

12. The clamp of claim 1, including apertures (**20a, 20b, 20c, 20d, 20e; 120**) in said clamping band (**10**) within an area spaced from said connecting and tightening means, for enhancing the effective value of said counterweight (**60**), wherein said apertures cover a circumferential area of the clamp of at least 45% of the entire clamp circumference when the connecting means (**40**) closes the clamp.

13. A balancing arrangement for balancing a rotating member, comprising the clamp of any preceding claim and a counterweight (**60**) of predetermined size and weight, said clamp extending over said counterweight (**60**) and being adapted to tightly engage external surfaces of the rotating member with the counterweight (**60**) in a predetermined position to thereby fixedly secure said counterweight (**60**) on said rotating member in said predetermined position, at least one of said connecting and tightening means being located within the same circumferential area of the clamping band (**10**) that also includes the counterweight (**60**) so that the weight of the at least one of connecting and tightening means is in effect additive to the weight of the counterweight (**60**).

14. The balancing arrangement of claim 13, wherein said counterweight (**60**) is secured to said clamping band (**10**) within the area between the connecting means (**40**) and the free end of the inner band end portion (**10a**).

15. The balancing arrangement of claim 13, wherein the counterweight (**60**) is of polygonal shape and includes anchoring means for anchoring the counterweight (**60**) in the external surfaces of the rotating member by bent-down corner areas of the counterweight (**60**) operable to dig into the surface of the rotating member.

16. The balancing arrangement of claim 13, wherein the clamping band (**10**) includes clamping band anchoring means for anchoring the clamping band (**10**) in the external surfaces of the rotating member and of the counterweight (60) by means of bent-down lateral clamping band portions (**10', 10"**) whose bent-down edges are operable to dig into the surfaces of the counterweight (**60**) and of the rotating member.

17. The balancing arrangement of claim 13, wherein said counterweight (**60**) is made up from one or more plate-like members dependent on the required weight, said plate-like members being provided with pressed-out means (**61**) to enable assembly of the required number of plate-like members in stacked relationship.

18. The balancing arrangement of claim 17, wherein said pressed-out means (**61**) are in the form of small pressed-out knub-like indentations.

19. The balancing arrangement of claim 17, wherein said plate-like members are of standard dimensions whose weights are changed by at least one of number, size and location of the openings (**62**).

20. The balancing arrangement of claim 13 for balancing imbalances in a rotating member smaller than the weight of the tightening and connecting means, further comprising initial balancing means fixed to said clamp to provide a clamp fully balanced in itself by a counterweight (**60**) fixedly secured to the clamping band (**10**) in the area opposite the circumferential area of said connecting and tightening means.

## Patentansprüche

1. Klemme zum Ausgleichen eines rotierenden Bauteils mittels eines Gegengewichts (**60**), mit
einem Klemmband (**10**) mit im eingebauten Zustand der Klemme einander überlappenden inneren und äußeren Bandendabschnitten (**10a, 10b; 210a, 210b**),
einer Verbindungseinrichtung (**40**) zum mechanischen Verbinden der freien Enden des Klemmbandes (**10**) und
einer Einrichtung zum Spannen des Klemmbandes (**10**) um das rotierende Bauteil, wobei die Spanneinrichtung ein plastisch verformbares Ohr (**30**) mit zwei über einen Brückenabschnitt (**33**) verbundenen auswärts verlaufenden Schenkelteilen (**31, 32**) aufweist, wobei der Brückenabschnitt mit einer Verstärkungseinrichtung (**34**) versehen ist, um die Haltekraft der Klemme bei Vorliegen eines schwereren Gegengewichts (**60**) zu erhöhen,
wobei die Verbindungs- und/oder die Spanneinrichtung in einem für das Gegengewicht (**60**) bestimmten Umfangsbereich des Klemmbandes (**10**) angeordnet ist, so daß sich das jeweilige Gewicht der Verbindungs- und/oder der Spanneinrichtung effektiv zu dem Gewicht eines gewählten Gegengewichts (**60**) addiert,
**dadurch gekennzeichnet, daß** die Verstärkungseinrichtung von mehreren tiefgezogenen nutartigen Verstärkungssicken (**34**) jeweils länglicher Form gebildet ist, die von im wesentlichen parallelen Seitenlängsflächen begrenzt ist, die an den Seiten jeder Sicke (**34**) durch im wesentlichen halbkreisförmige, quer verlaufende Verbindungsteile miteinander verbunden sind.

2. Klemme nach Anspruch 1, wobei jede Verstärkungssicke (**34**) einen abgerundeten Boden (**35**) aufweist und wobei die Seitenwände von der Oberseite des Brückenabschnitts (**33**) nach unten und mindestens leicht aufeinander zu geneigt sind und in den abgerundeten Boden (**35**) mit einem Winkel (α) in der Größenordnung von 15° überzugehen.

3. Klemme nach Anspruch 1, wobei die nutartigen Verstärkungssicken (**34**) in dem Brückenabschnitt (**33**) symmetrisch zur Längsmittelebene des Klemmbandes (**10**) angeordnet sind und die Tiefe jeder der nutartigen Verstärkungssicken (**34**) von der Oberseite des Brückenabschnitts (**33**) bis zur unteren Fläche des Bodens (**35**) in der Größenordnung von 55% bis 65% der Höhe des Ohres (**33**) von der Oberseite des Brückenabschnitts (**33**) zur Bodenfläche des Klemmbandes (**10**) in dessen geraden Zustand betragen.

4. Klemme nach Anspruch 3, wobei das Ohr (**30**) eine Höhe in der Größenordnung von 3,5 mm hat.

5. Klemme nach Anspruch 1, wobei die Verbindungseinrichtung (**40**) in einem der Bandendabschnitte (**10a, 10b**) mindestens einen herausgepreßten tief gezogenen Stützhaken (**41**) und mindestens einen laschenartigen kombinierten Führungs- und Stützhaken (**43**) aufweist, der um eine in Längsrichtung des Klemmbandes (**10**) verlaufende Achse aus dem Klemmband (**10**) herausgebogen ist, und in dem anderen Bandendabschnitt mindestens eine im wesentlichen rechteckige Öffnung (**42**) zum Eingriff des Stützhakens (**41**) und eine in Längsrichtung des Klemmbandes (**10**) verlaufende schlitzartige Öffnung (**44**) zum Eingriff des kombinierten Führungs- und Stützhakens (**43**).

6. Klemme nach Anspruch 5, wobei, ausgehend vom freien Ende des inneren Bandendabschnitts (**10a**), der kombinierte Führungs- und Stützhaken (**43**) in Richtung von dem freien Ende weg auf den mindestens einen Stützhaken (**41**) folgt.

7. Klemme nach Anspruch 5, wobei der kombinierte Führungs- und Stützhaken (**43**) eine nach oben verlaufende schräge Führungsfläche (**43'**) und eine nach vorne weisende Spitze mit einem leicht nach unten verlaufenden Spitzenendabschnitt (**43"**) aufweist, um ein Lösen des äußeren Bandendabschnitts (**10b**) von dem kombinierten Führungs- und Stützhaken (**43**) zu verhindern.

8. Klemme nach Anspruch 7, wobei der kombinierte Führungs- und Stützhaken (**43**) aus einem ersten Schnitt (**43a**) und einem nachfolgenden teilkreisförmigen Schnitt (**43b**) resultiert und anschließend in seine senkrechte Stellung aufgebogen ist.

9. Klemme nach Anspruch 1, wobei das Klemmband (**10**) aus galvanisiertem oder nichtrostendem Stahlmaterial gebildet ist, das in der Längsrichtung keine wesentliche elastische Streckbarkeit aufweist.

10. Klemme nach Anspruch 1 mit einer in dem Klemmband (**10**) vorgesehenen Wellung, die vorzugsweise in dem äußeren Bandendabschnitt (**10b**) innerhalb eines Bereichs nahe dem Beginn der Überlappung angeordnet ist.

11. Klemme nach Anspruch 1, wobei das Klemmband (**10**) Elastizität von einer im Querschnitt quer zur Klemmbandlängsrichtung konvexen Konfiguration erhält, die einer Abflachung beim Spannen des Klemmbandes (**10**) widersteht.

12. Klemme nach Anspruch 1 mit Öffnungen (**20a, 20b, 20c, 20d, 20e; 120**) in dem Klemmband (**10**) innerhalb eines Bereichs in Abstand von den Verbindungs- und Spanneinrichtungen, die die effektive Größe des Gegengewichts (**10**) erhöhen, wobei die Öffnungen einen Umfangsbereich der Klemme von mindestens 45% des gesamten Klemmenumfangs einnehmen, wenn die Verbindungseinrichtung (**40**) die Klemme schließt.

13. Ausgleichsanordnung zur Ausgleich eines rotierenden Bauteils mit einer Klemme nach einem der vorhergehenden Ansprüche und einem Gegengewicht (**60**) von vorgegebener Größe und Gewicht, wobei die Klemme über das Gegengewicht (**60**) verläuft und so ausgelegt ist, daß sie die Außenflächen des rotierenden Bauteils mit dem in vorgegebener Lage befindlichen Gegengewicht (**60**) eng umschließt, um das Gegengewicht (**60**) an dem rotierenden Bauteil in der vorgegebenen Position sicher zu befestigen, wobei die Verbindungs- und/oder die Spanneinrichtung innerhalb desjenigen Umfangsbereichs des Klemmbandes (**10**) vorliegt, der auch das Gegengewicht (**60**) enthält, so daß sich das Gewicht der Verbindungs- und/oder der Spanneinrichtung effektiv zu dem des Gegengewichts (**60**) addiert.

14. Ausgleichsanordnung nach Anspruch 13, wobei das Gegengewicht (**60**) an dem Klemmband (**10**) innerhalb des Bereichs zwischen der Verbindungseinrichtung (**60**) und dem freien Ende des inneren Bandendabschnitts (**10a**) befestigt ist.

15. Ausgleichsanordnung nach Anspruch 13, wobei das Gegengewicht (**60**) eine mehreckige Form hat und eine Verankerungseinrichtung zum Verankern des Gegengewichts (**60**) in den Außenflächen des rotierenden Bauteils durch abgebogene Eckbereiche des Gegengewichts (**10**) aufweist, die in die Oberfläche des rotierenden Bauteils eindringen.

16. Ausgleichsanordnung nach Anspruch 13, wobei das Klemmband (**10**) eine Klemmband-Verankerungseinrichtung zum Verankern des Klemmbandes (**10**) in den Außenflächen des rotierenden Bauteils und des Gegengewichts (**60**) mittels abgebogenen seitlichen Klemmbandteilen (**10', 10"**) aufweist, dessen abgebogene Kanten in die Oberflächen des Gegengewichts (**60**) und des rotierenden Bauteils eindringen.

17. Ausgleichsanordnung nach Anspruch 13, wobei das Gegengewicht (**60**) je nach dem benötigten Gewicht aus ein oder mehreren plattenartigen Teilen besteht, die mit Ausprägungen (**61**) zur erleichterten Montage der erforderlichen Anzahl von plattenartigen Teilen in Form eines Stapels versehen sind.

18. Ausgleichsanordnung nach Anspruch 17, wobei die Ausprägungen (**61**) die Form kleiner ausgeprägter knopfartiger Sicken haben.

19. Ausgleichsanordnung nach Anspruch 17, wobei die plattenartigen Teile Standardabmessungen haben und in ihrem Gewicht durch die Anzahl und/oder Größe und/oder Anordnung von Öffnungen (**62**) änderbar sind.

20. Ausgleichsanordnung nach Anspruch 13 zum Ausgleichen von Unwuchten in einem rotierenden Bauteil, die geringer sind als das Gewicht der Spann- und Verbindungseinrichtungen, mit ferner an der Klemme befestigten Anfangs-Ausgleichseinrichtungen, um eine Klemme zu erzeugen, die in sich vollständig durch ein Gegengewicht (**60**) ausgewuchtet ist, das an dem Klemmband (**10**) in dem dem Umfangsbereich der Verbindungs- und Spanneinrichtungen gegenüberliegenden Bereich sicher befestigt ist.

## Revendications

1. Collier pour équilibrer un élément rotatif au moyen d'un contrepoids (60), comportant
une bande de serrage (10) ayant des parties d'extrémité de bande intérieure et extérieure (10a, 10b ; 210a, 210b) qui se chevauchent dans l'état installé du collier,
des moyens de liaison (40) pour relier mécaniquement les extrémités libres de ladite bande de serrage (10), et
des moyens pour serrer la bande de serrage (10) autour dudit élément rotatif, lesdits moyens de serrage comportant une oreille déformable plastiquement (30) ayant deux parties formant pattes s'étendant vers l'extérieur (31, 32) mutuellement reliées par une partie en pont (33) munie de moyens de renforcement (34) pour augmenter la capacité de blocage du collier en présence d'un contrepoids plus lourd (60),
dans lequel au moins un desdits moyens de liaison et de serrage est placé à l'intérieur d'une zone circonférentielle de la bande de serrage (10) prévue pour le contrepoids (60) de sorte que tout poids du au moins un des moyens de liaison et de serrage est en fait additionnel au poids d'un contrepoids sélectionné (60),
**caractérisé en ce que** lesdits moyens de renforcement sont formés par plusieurs entailles de renforcement analogues à des rainures, obtenues par emboutissage profond (34), ayant chacune une forme allongée délimitée par des surfaces latérales longitudinales sensiblement parallèles, mutuellement reliées par des parties de liaison sensiblement semi-circulaires s'étendant transversalement sur les côtés de chaque entaille (34).

2. Collier selon la revendication 1, dans lequel chacune desdites entailles de renforcement (34) a un fond arrondi (35), les surfaces latérales étant inclinées à partir de la surface supérieure de la partie en pont (33) vers le bas et au moins légèrement en direction d'une autre pour se rejoindre dans le fond arrondi (35) en formant un angle (α) de l'ordre de 15°.

3. Collier selon la revendication 1, dans lequel lesdites entailles de renforcement analogues à des rainures (34) sont positionnées dans ladite partie en pont (33) de manière symétrique par rapport au plan central longitudinal de la bande de serrage (10), et dans lequel la profondeur de chacune desdites entailles de renforcement analogues à des rainures (34) depuis la surface supérieure de la partie en pont (33) jusqu'à la surface inférieure du fond (35) est de l'ordre de 55 à 65 % de la hauteur de l'oreille (30) depuis la surface supérieure de la partie en pont (33) jusqu'à la surface inférieure de la bande de serrage (10) dans son état rectiligne.

4. Collier selon la revendication 3, dans lequel ladite oreille (30) a une hauteur de l'ordre de 3,5 mm.

5. Collier selon la revendication 1, dans lequel lesdits moyens de liaison (40) comportent dans l'une desdites parties d'extrémité de bande (10a, 10b) au moins un crochet de support obtenu par emboutissage profond, pressé vers l'extérieur (41) et un crochet de guidage et de support combinés, analogue à une languette (43) plié vers l'extérieur de la bande de serrage (10) autour d'un axe s'étendant dans la direction longitudinale de la bande de serrage (10), et dans l'autre partie d'extrémité de bande sur au moins une ouverture sensiblement rectangulaire (42) pour une mise en prise par ledit crochet de support (41) et une ouverture analogue à une fente (44) s'étendant dans la direction longitudinale de la bande de serrage (10) pour une mise en prise par ledit crochet de guidage et de support combinés (43).

6. Collier selon la revendication 5, dans lequel en débutant à partir de l'extrémité libre de la partie d'extrémité de bande intérieure (10a), ledit au moins un crochet de support (41) est suivi dans une direction en s'éloignant de ladite extrémité libre dudit crochet de guidage et de support combinés (43).

7. Collier selon la revendication 5, dans lequel ledit crochet de guidage et de support combinés (43) comporte une surface de guidage oblique s'étendant vers le haut (43') et un embout s'étendant vers l'avant en ayant une partie d'extrémité d'embout s'étendant légèrement vers le bas (43") pour empêcher une libération de la partie d'extrémité de bande extérieure (10b) à partir du crochet de guidage et de support combinés (43).

8. Collier selon la revendication 7, dans lequel ledit crochet de guidage et de support combinés (43) résulte d'une première découpe (43a) et d'une découpe partiellement circulaire subséquente (43b) avant un pliage du crochet de guidage et de support combinés (43) dans sa position verticale.

9. Collier selon la revendication 1, dans lequel ladite bande de serrage (10) est fabriquée à partir d'un acier inoxydable ou galvanisé dépourvu de toute aptitude importante à l'allongement élastique dans sa direction longitudinale.

10. Collier selon la revendication 1, comportant une ondulation dans la bande de serrage (10), de préférence positionnée dans la partie d'extrémité de bande extérieure (10b) dans une zone proche du début du chevauchement.

11. Collier selon la revendication 1, dans lequel une élasticité est donnée à ladite bande de serrage (10) par une configuration formée de manière convexe dans une section transversale à la direction longitudinale de la bande de serrage qui résiste à un aplatissement pendant un serrage de la bande de serrage (10).

12. Collier selon la revendication 1, comportant des ouvertures (20a, 20b, 20c, 20d, 20e ; 120) dans ladite bande de serrage (10) dans une zone espacée par rapport auxdits moyens de liaison et de serrage, pour améliorer la valeur efficace dudit contrepoids (60), dans lequel lesdites ouvertures couvrent une zone circonférentielle du collier d'au moins 45 % de la totalité de la circonférence de collier lorsque les moyens de liaison (40) ferment le collier.

13. Agencement d'équilibrage pour équilibrer un élément rotatif, comportant le collier de l'une quelconque des revendications précédentes et un contrepoids (60) de taille et de poids prédéterminés, ledit collier s'étendant au-dessus dudit contrepoids (60) et étant adapté pour venir en contact de manière serrée avec des surfaces extérieures de l'élément rotatif en ayant le contrepoids (60) dans une position prédéterminée pour ainsi bloquer de manière fixe ledit contrepoids (60) sur ledit élément rotatif dans ladite position prédéterminée, au moins un desdits moyens de liaison et de serrage étant positionné dans la même zone circonférentielle de la bande de serrage (10) qui inclut également le contrepoids (60) de sorte que le poids du au moins un des moyens de liaison et de serrage est en fait additionnel au poids du contrepoids (60).

14. Agencement d'équilibrage selon la revendication 13, dans lequel ledit contrepoids (60) est fixé sur ladite bande de serrage (10) dans la zone entre les moyens de liaison (40) et l'extrémité libre de la partie d'extrémité de bande intérieure (10a)

15. Agencement d'équilibrage selon la revendication 13, dans lequel le contrepoids (60) a une forme polygonale et comporte des moyens d'ancrage pour ancrer le contrepoids (60) dans les surfaces extérieures de l'élément rotatif par des zones de coin pliées vers le bas du contrepoids (60) pouvant fonctionner pour être enfoncées dans la surface de l'élément rotatif.

16. Agencement d'équilibrage selon la revendication 13, dans lequel la bande de serrage (10) comporte des moyens d'ancrage de bande de serrage pour ancrer la bande de serrage (10) dans les surfaces extérieures de l'élément rotatif et du contrepoids (60) au moyen de parties latérales de bande de serrage pliées vers le bas (10', 10") dont des bords pliés vers le bas peuvent fonctionner pour être enfoncés dans les surfaces du contrepoids (60) et de l'élément rotatif.

17. Agencement d'équilibrage selon la revendication 13, dans lequel ledit contrepoids (60) est fabriqué à partir d'un ou de plusieurs éléments analogues à des plaques dépendant du poids requis, lesdits éléments analogues à des plaques étant munis de moyens pressés vers l'extérieur (61) pour permettre un assemblage du nombre requis d'éléments analogues à des plaques dans une disposition empilée.

18. Agencement d'équilibrage selon la revendication 17, dans lequel lesdits moyens pressés vers l'extérieur (61) ont la forme de petites entailles analogues à des cocons de soie, pressées vers l'extérieur.

19. Agencement d'équilibrage selon la revendication 17, dans lequel lesdits éléments analogues à des plaques ont des dimensions standard, dont les poids sont changés par au moins un élément parmi le nombre, la taille et la position des ouvertures (62).

20. Agencement d'équilibrage selon la revendication 13 pour équilibrer des balourds dans un élément rotatif plus petits que le poids des moyens de serrage et de liaison, comportant également des moyens d'équilibrage initial fixés sur ledit collier pour créer un collier totalement équilibré en lui-même par un contrepoids (60) bloqué de manière fixe sur la bande de serrage (10) dans la zone opposée à la zone circonférentielle desdits moyens de serrage et de liaison.
